# EUROPÄISCHE PATENTSCHRIFT

(11) **EP 0 974 503 B1**
(45) Veröffentlichungstag und Bekanntmachung des Hinweises auf die Patenterteilung: **18.01.2006**
(21) Anmeldenummer: 99112913.1
(22) Anmeldetag: 05.07.1999
(51) Int. Cl.: B60S 1/52, B60S 1/34

(54) **Scheibenreinigungsanlage**
Windscreen cleaning apparatus
Agencement de nettoyage pour pare-brise

(30) Priorität: 23.07.1998 DE 19833142
(43) Veröffentlichungstag der Anmeldung: 26.01.2000
(73) Patentinhaber: SIEMENS AKTIENGESELLSCHAFT, 80333 München (DE)
(72) Erfinder: Vogt, Gerhard, 36179 Bebra (DE)

(56) Entgegenhaltungen:
- EP-A- 0 442 270
- EP-A- 0 667 267
- WO-A-96/22203
- DE-A- 3 544 589
- DE-A- 4 025 732

## Beschreibung

Die Erfindung betrifft eine Scheibenreinigungsanlage für eine Scheibe eines Kraftfahrzeuges mit einem schwenkbar gelagerten Scheibenwischerarm zur Halterung einer in der vorgesehenen Einbaulage über die Scheibe gleitenden Wischlippe und mit zumindest einer an dem Scheibenwischerarm angeordneten, zu einer auf die Scheibe gerichteten Waschdüse geführten Waschflüssigkeitsleitung, wobei in der Waschdüse und/oder der Waschflüssigkeitsleitung befindliche Waschflüssigkeit beheizbar ist.

Solche Scheibenreinigungsanlagen werden für Front- oder Heckscheiben oder für Streuscheiben von Scheinwerfern eines Kraftfahrzeuges eingesetzt und sind aus der Praxis bekannt. Aus der Wo-A-96/22203 ist eine Scheibenreinigungsanlage mit auf dem Scheibenwischerarm angeordneten Waschdüsen bekannt. Die Waschdüsen werden hierbei von einer in einem Waschflüssigkeitsbehälter angeordneten Waschflüssigkeitspumpe mit Waschflüssigkeit versorgt. Die Anordnung einer oder mehrerer Waschdüsen entlang des Scheibenwischerarms hat den Vorteil, daß besonders wenig Waschflüssigkeit neben den Wischbereich der Wischlippe oder auf die Rückseite des Scheibenwischerarms gelangt. Da hierbei die Waschdüse mit besonders geringem Abstand vor der Scheibe angeordnet ist und der aus der Waschdüse austretende Waschflüssigkeitsstrahl im Bereich der Scheibe einen besonders hohen Druck hat, kann zudem auf der Scheibe haftender Schmutz von dem Waschflüssigkeitsstrahl gelöst werden.

Die Waschdüsen sind unmittelbar dem Fahrtwind ausgesetzt, so daß ein Austreten von Waschflüssigkeit zu deren Verdunstung und damit zu einer starken Kühlung der Waschdüsen führt. Da in der Waschflüssigkeit häufig Zusätze von Reinigungsmitteln mit einem niedrigen Siedepunkt beigemischt sind, kann die Waschdüse auch bei Temperaturgraden über 0°C einfrieren. Da bei abgeschalteter Waschflüssigkeitspumpe Luft durch die Waschdüse in die Waschflüssigkeitsleitung eintreten kann, wird zudem die Waschflüssigkeitsleitung insbesondere bei niedrigen Außentemperaturen stark gekühlt. Dies kann bei einem erneuten Einschalten der Waschflüssigkeitspumpe ebenfalls zu einem Einfrieren der Waschdüse führen. Hierdurch ist eine zuverlässige Benetzung der Scheibe mit Waschflüssigkeit nicht mehr gewährleistet. Dadurch besteht die Gefahr, daß die Wischlippe über die noch trockene Scheibe bewegt wird und hierdurch sehr schnell verschleißt.

Aus der DE 40 257 32 A1 ist ein Rückschlagventil mit einem Heizelement bekannt geworden, welches zur Montage in fluidgeführten Leitungen vorgesehen ist. Das Heizelement verhindert das Einfrieren des Rückschlagventils und ist mit diesem in einem gemeinsamen Gehäuse angeordnet. Das Gehäuse weist Anschlusstutzen zum Anschluss von zu den Waschdüsen führenden Leitungen auf. Damit ist das Heizelement weit von der Waschdüse entfernt und vermag diese nicht zu heizen.

Der Erfindung liegt das Problem zugrunde, eine Scheibenreinigungsanlage der eingangs genannten Art so zu gestalten, daß die Scheibe auch bei niedrigen Außentemperaturen zuverlässig mit Waschflüssigkeit benetzt und ein Verschleiß der Wischlippe besonders gering gehalten wird.

Dieses Problem wird erfindungsgemäß dadurch gelöst, daß in Strömungsrichtung gesehen unmittelbar vor der Waschdüse ein Rückschlagventil und nahe der Waschdüse ein elektrisches Heizelement angeordnet ist.

Durch diese Gestaltung läßt sich die Waschdüse auf eine vorgesehene Temperatur heizen, so daß die Gefahr eines Einfrierens der Waschflüssigkeit besonders gering gehalten wird. Da das Heizelement nahe der Waschdüse angeordnet ist, werden Verluste an Heizenergie besonders gering gehalten. Zudem wird ein schnelles Aufheizen der Waschdüse, beispielsweise bei einer Verdunstungskühlung, sichergestellt. Weiterhin kann Luft nur in den dank der Erfindung klein gehaltenen Bereich bis zu dem Rückschlagventil vordringen, nachdem dort befindliche Waschflüssigkeit durch die Waschdüse ausgetreten ist. Die Waschdüse wird hierdurch nur unwesentlich gekühlt. Weiterhin führt die nahe Anordnung des Rückschlagventils an der Waschdüse zu einer besonders geringen Verzögerung des Austretens der Waschflüssigkeit bei einem Betätigen der Waschflüssigkeitspumpe. Hierdurch wird die Scheibe nach einem Einschalten der Waschflüssigkeitspumpe zuverlässig mit Waschflüssigkeit benetzt, und deshalb ein Verschleiß der Wischlippe besonders gering gehalten.

Die erfindungsgemäße Scheibenreinigungsanlage gestaltet sich besonders kostengünstig, wenn die Waschdüse zusammen mit dem Heizelement und dem Rückschlagventil als vormontierbare bauliche Einheit gestaltet ist.

Kurvenfahrten oder ein starkes Abbremsen oder Beschleunigen des Kraftfahrzeuges können wegen der Massenträgheit der Waschflüssigkeitssäule der Waschflüssigkeit in der Waschflüssigkeitsleitung zu einem Austreten der Waschflüssigkeit aus der Waschdüse führen. Dies wirkt sich insbesondere bei der für eine Front- oder Heckscheibe vorgesehenen Scheibenreinigungsanlage sehr störend aus. Ein Austreten von Waschflüssigkeit aus der Waschdüse ohne ein Einschalten der Waschflüssigkeitspumpe läßt sich gemäß einer anderen vorteilhaften Weiterbildung der Erfindung zuverlässig vermeiden, wenn das Rückschlagventil mit einer zum Halten einer Waschflüssigkeitssäule vorgesehenen Kraft in Schließstellung vorgespannt ist. Hierdurch läßt sich das Rückschlagventil nur mit einem vergleichsweise hohen Druck der Waschflüssigkeitspumpe öffnen.

Man könnte das Rückschlagventil mit einem von einer Feder entgegen der Strömungsrichtung gegen einen Ventilsitz vorgespannten Schließteil versehen. Hierbei setzt das Schließteil der Strömung jedoch einen hohen Widerstand entgegen. Das Rückschlagventil erzeugt gemäß einer anderen vorteilhaften Weiterbildung der Erfindung bei einer Förderung von Waschflüssigkeit durch die Waschflüssigkeitspumpe eine nur unwesentliche Drosselung der Strömung, wenn das Rückschlagventil als Entenschnabelventil gestaltet ist. Entenschnabelventile weisen zumindest zwei einander gegenüberstehende Dichtlippen auf, die gegeneinander vorgespannt sind. In Offenstellung werden die Dichtlippen von der Strömung auseinandergedrückt.

Die erfindungsgemäße Scheibenreinigungsanlage gestaltet sich konstruktiv besonders einfach, wenn die Waschdüse auf einem Halteteil angeordnet und das Rückschlagventil zwischen einem Anschlußstutzen der Waschflüssigkeitsleitung und dem Halteteil eingespannt ist.

Das Heizelement wird gemäß einer anderen vorteilhaften Weiterbildung der Erfindung nur unwesentlich von dem Fahrtwind gekühlt, wenn das Halteteil eine Ausnehmung zur Aufnahme des Heizelementes hat.

Zur weiteren Verringerung von Wärmeverlusten des Heizelementes trägt es gemäß einer anderen vorteilhaften Weiterbildung der Erfindung bei, wenn die Ausnehmung von einer Klappe verschließbar ist.

Die Montage des Halteteils gestaltet sich gemäß einer anderen vorteilhaften Weiterbildung der Erfindung besonders einfach, wenn das Halteteil über ein Filmscharnier mit der Klappe verbunden ist. Hierdurch kann die Klappe vor der Montage zudem nicht verlorengehen.

Das Halteteil gestaltet sich gemäß einer anderen vorteilhaften Weiterbildung der Erfindung besonders kostengünstig, wenn das Halteteil aus Kunststoff im Spritzgußverfahren gefertigt ist. Weiterhin können hierdurch das Halteteil, das Filmscharnier und die Klappe in einer einzigen axial entformbaren Form gefertigt werden.

Auf der Scheibe anhaftender Schmutz wird gemäß einer anderen vorteilhaften Weiterbildung der Erfindung von dem Waschflüssigkeitsstrahl weggespült oder zumindest angelöst, wenn die Waschdüse eine Fluidic-Düse hat. Fluidic-Düsen erzeugen einen besonders scharfen hin- und herschwingenden Waschflüssigkeitsstrahl. Das Anlösen des Schmutzes führt zu einer weiteren Verringerung des Verschleißes der Wischlippe.

Eine Anpassung der zu benetzenden Fläche auf die Wischfläche der Wischlippe gestaltet sich gemäß einer anderen vorteilhaften Weiterbildung der Erfindung besonders einfach, wenn die Waschdüse eine Flachstrahlkugel hat. Flachstrahlkugeln erzeugen einen im wesentlichen sich in einer Richtung erstreckenden Waschflüssigkeitsstrahl und erlauben daher eine optimale Anpassung an die zu benetzende Fläche der Scheibe. Durch die kugelförmige Gestaltung ist zudem eine stufenlose Ausrichtung der Waschdüse möglich.

Die erfindungsgemäße Scheibenreinigungsanlage ist besonders kostengünstig aufgebaut, wenn das Heizelement als Dickschichtnetzwerk ausgebildet ist.

Eine aufwendige temperaturabhängige Steuerung des Heizelementes läßt sich gemäß einer anderen vorteilhaften Weiterbildung der Erfindung einfach vermeiden, wenn das Heizelement als PTC-Element ausgebildet ist. Solche PCT-Elemente sind auch als Kaltleiter bekannt und haben einen mit fallender Temperatur steigenden elektrischen Widerstand. Da mit steigendem Widerstand die Heizleistung des Heizelementes ansteigt, wird die Waschdüse dank der Erfindung zuverlässig vor einem Einfrieren geschützt.

Die Montage der baulichen Einheit aus Waschdüse und Heizelement an dem Kraftfahrzeug gestaltet sich gemäß einer anderen vorteilhaften Weiterbildung der Erfindung besonders einfach, wenn die Waschflüssigkeitsleitung einteilig mit elektrischen Leitungen zur Versorgung des Heizelementes der Waschdüse mit elektrischem Strom gefertigt ist.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: einen Scheibenwischerarm mit einem Halteteil für Waschdüsen einer erfindungsgemäßen Scheibenreinigungsanlage,
- Fig.2: das Halteteil der Scheibenreinigungsanlage aus Figur 1 in einem Längsschnitt,
- Fig.3: das Halteteil aus Figur 2 in einer Schnitt-darstellung entlang der Linie III - III.

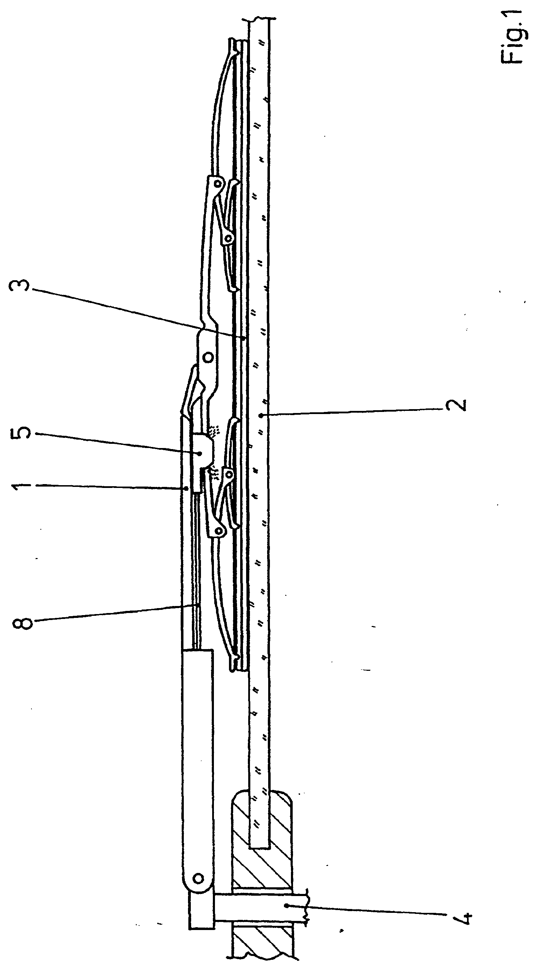

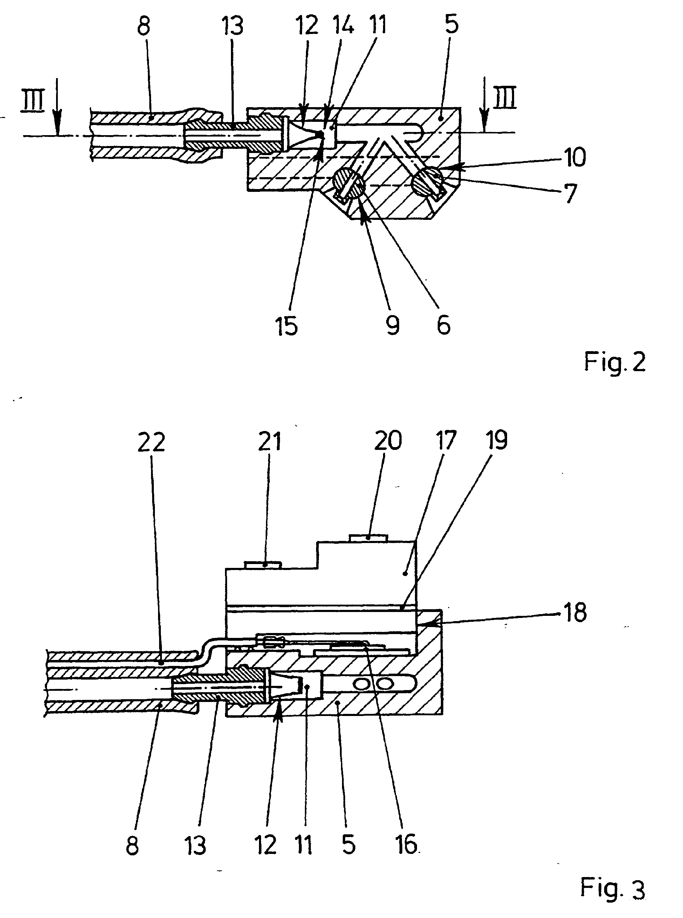

Die Figur 1 zeigt einen Scheibenwischerarm 1 mit einer an einer Scheibe 2 des Kraftfahrzeuges anliegenden Wischlippe 3. Der Scheibenwischerarm 1 ist auf einer von einem nicht dargestellten Scheibenwischermotor schwenkbaren Welle 4 befestigt. Hierdurch läßt sich die Wischlippe 3 über der Scheibe 2 verschwenken. Bei der Scheibe 2 kann es sich beispielsweise um eine Front- oder Heckscheibe oder auch um eine Streuscheibe für einen Scheinwerfer des Kraftfahrzeuges handeln. Der Scheibenwischerarm 1 trägt weiterhin ein Halteteil 5 für zwei in Figur 2 dargestellte Waschdüsen 6, 7. An dem Halteteil 5 ist eine Waschflüssigkeitsleitung 8 angeschlossen. Hierdurch kann die Scheibe 2 mit Waschflüssigkeit benetzt werden.

Die Figur 2 zeigt das Halteteil 5 aus Figur 1 in einem Längsschnitt. Hierbei ist zu erkennen, daß die Waschdüsen 6, 7 als Flachstrahlkugeln ausgebildet und in einer kugelförmigen Ausnehmung 9, 10 des Halteteils 5 befestigt sind. Hierdurch läßt sich der Sprühbereich auf der in Figur 1 dargestellten Scheibe 2 eingrenzen. Das Halteteil 5 hat zudem einen Waschflüssigkeitskanal 11 mit einem darin angeordneten Rückschlagventil 12. In dem Halteteil 5 ist ein Anschlußstutzen 13 für die Waschflüssigkeitsleitung 8 eingepreßt. Der Anschlußstutzen 13 verspannt das Rückschlagventil 12 in dem Halteteil 5. Das Rückschlagventil 12 ist als Entenschnabelventil mit zwei gegeneinander vorgespannten Dichtlippen 14, 15 gestaltet und öffnet bei einem vorgesehenen hohen Druck einer nicht dargestellten Waschflüssigkeitspumpe. Hierdurch wird verhindert, daß Waschflüssigkeit durch ihre Massenträgheit, beispielsweise bei Kurvenfahrt oder bei einem starken Beschleunigen oder Abbremsen des Kraftfahrzeuges, das Rückschlagventil 12 passiert und die Scheibe 2 benetzt.

Die Figur 3 zeigt das Halteteil 5 aus Figur 2 in einer Schnittdarstellung entlang der Linie III - III. Hierbei ist zu erkennen, daß nahe der in Figur 2 dargestellten Waschdüsen 6, 7 ein elektrisches Heizelement 16 angeordnet ist. Zur Aufnahme des Heizelementes 16 hat das Halteteil 5 eine von einer Klappe 17 verschließbare Ausnehmung 18. Die Klappe 17 ist über ein Filmscharnier 19 mit dem Halteteil 5 verbunden und hat Rasthaken 20, 21 zur Befestigung an dem Halteteil 5. Das Heizelement 16 wird über einteilig mit der Waschflüssigkeitsleitung 8 gefertigte elektrische Leitungen 22 mit elektrischem Strom versorgt. Das Halteteil 5 bildet mit den Waschdüsen 6, 7, dem Heizelement 16 und dem Rückschlagventil 12 eine vormontierbare bauliche Einheit.

## Patentansprüche

1. Scheibenreinigungsanlage für eine Scheibe eines Kraftfahrzeuges mit einem schwenkbar gelagerten Scheibenwischerarm zur Halterung einer in der vorgesehenen Einbaulage über die Scheibe gleitenden Wischlippe und mit zumindest einer an dem Scheibenwischerarm angeordneten, zu einer auf die Scheibe gerichteten Waschdüse geführten Waschflüssigkeitsleitung, wobei in der Waschdüse und/oder der Waschflüssigkeitsleitung befindliche Waschflüssigkeit beheizbar ist, **dadurch gekennzeichnet, daß** in Strömungsrichtung gesehen unmittelbar vor der Waschdüse (6, 7) ein Rückschlagventil (12) und nahe der Waschdüse (6, 7) ein elektrisches Heizelement (16) angeordnet ist.

2. Scheibenreinigungsanlage nach Anspruch 1, **dadurch gekennzeichnet, daß** die Waschdüse (6, 7) zusammen mit dem Heizelement (16) und dem Rückschlagventil (12) als vormontierbare bauliche Einheit gestaltet ist.

3. Scheibenreinigungsanlage nach Anspruch 1 oder 2, **dadurch gekennzeichnet, daß** das Rückschlagventil (12) mit einer zum Halten einer Waschflüssigkeitssäule vorgesehenen Kraft in Schließstellung vorgespannt ist.

4. Scheibenreinigungsanlage nach zumindest einem der vorhergehenden Ansprüche, **dadurch gekennzeichnet, daß** das Rückschlagventil (12) als Entenschnabelventil gestaltet ist.

5. Scheibenreinigungsanlage nach zumindest einem der vorhergehenden Ansprüche, **dadurch gekennzeichnet, daß** die Waschdüse (6, 7) auf einem Halteteil (5) angeordnet und das Rückschlagventil (12) zwischen einem Anschlußstutzen (13) der Waschflüssigkeitsleitung (8) und dem Halteteil (5) eingespannt ist.

6. Scheibenreinigungsanlage nach zumindest einem der vorhergehenden Ansprüche, **dadurch gekennzeichnet, daß** das Halteteil (5) eine Ausnehmung (18) zur Aufnahme des Heizelementes (16) hat.

7. Scheibenreinigungsanlage nach zumindest einem der vorhergehenden Ansprüche, **dadurch gekennzeichnet, daß** die Ausnehmung (18) von einer Klappe (17) verschließbar ist.

8. Scheibenreinigungsanlage nach zumindest einem der vorhergehenden Ansprüche, **dadurch gekennzeichnet, daß** das Halteteil (5) über ein Filmscharnier (19) mit der Klappe (17) verbunden ist.

9. Scheibenreinigungsanlage nach zumindest einem der vorhergehenden Ansprüche, **dadurch gekennzeichnet, daß** das Halteteil (5) aus Kunststoff im Spritzgußverfahren gefertigt ist.

10. Scheibenreinigungsanlage nach zumindest einem der vorhergehenden Ansprüche, **dadurch gekennzeichnet, daß** die Waschdüse (6, 7) eine Fluidic-Düse hat.

11. Scheibenreinigungsanlage nach zumindest einem der vorhergehenden Ansprüche, **dadurch gekennzeichnet, daß** die Waschdüse (6, 7) eine Flachstrahlkugel hat.

12. Scheibenreinigungsanlage nach zumindest einem der vorhergehenden Ansprüche, **dadurch gekennzeichnet, daß** das Heizelement (16) als Dickschichtnetzwerk ausgebildet ist.

13. Scheibenreinigungsanlage nach zumindest einem der vorhergehenden Ansprüche, **dadurch gekennzeichnet, daß** das Heizelement (16) als PTC-Element ausgebildet ist.

14. Scheibenreinigungsanlage nach zumindest einem der vorhergehenden Ansprüche, **dadurch gekennzeichnet, daß** die Waschflüssigkeitsleitung (8) einteilig mit elektrischen Leitungen (22) zur Versorgung des Heizelementes (16) der Waschdüse (6, 7) mit elektrischem Strom gefertigt ist.

## Claims

1. Window and lens glass cleaning system for a window/lens glass of a motor vehicle, having a pivotally mounted wiper arm for holding a wiper lip, which slides over Window/lens glass, in the intended installation position, and having at least one washer fluid pipe which is arranged on the wiper arm and is routed to a washer nozzle which is directed onto Window/lens glass, washer fluid situated in the washer nozzle and/or the washer fluid pipe being heatable, **characterized in that** a non-return valve (12) is arranged directly in front of the washer nozzle (6, 7), as seen in the direction of flow, and an electric heating element (16) is arranged near to the washer nozzle (6, 7).

2. Window and lens glass cleaning system according to Claim 1, **characterized in that** the washer nozzle (6, 7) together with the heating element (16) and the non-return valve (12) is configured as a constructional unit which can be preassembled.

3. Window and lens glass cleaning system according to Claim 1 or 2, **characterized in that** the non-return valve (12) is pretensioned into a closed position by a force provided for sustaining a washer fluid column.

4. Window and lens glass cleaning system according to at least one of preceding claims, **characterized in that** the non-return valve (12) is configured as a duckbill valve.

5. Window and lens glass cleaning system according to at least one of the preceding claims, **characterized in that** the washer nozzle (6, 7) is arranged on a retaining part (5) and the non-return valve (12) is clamped between a connecting branch (13) of the washer fluid pipe (8) and the retaining part (5).

6. Window and lens glass cleaning system according to at least one of the preceding claims, **characterized in that** the retaining part (5) has a recess (18) for accommodating the heating element (16).

7. Window and lens glass cleaning system according to at least one of the preceding claims, **characterized in that** the recess (18) can be closed by a flap (17).

8. Window and lens glass cleaning system according to at least one of the preceding claims, **characterized in that** the retaining part (5) is connected to the flap (17) via a film hinge (19).

9. Window and lens glass cleaning system according to at least one of the preceding claims, **characterized in that** the retaining part (5) is manufactured from plastic by injection moulding.

10. Window and lens glass cleaning system according to at least one of the preceding claims, **characterized in that** the washer nozzle (6, 7) has a fluidic nozzle.

11. Window and lens glass cleaning system according to at least one of the preceding claims, **characterized in that** the washer nozzle (6, 7) has a flat-jet ball.

12. Window and lens glass cleaning system according to at least one of the preceding claims, **characterized in that** the heating element (16) is designed as a thick-film mesh.

13. Window and lens glass cleaning system according to at least one of the preceding claims, **characterized in that** the heating element (16) is designed as a PTC element.

14. Window and lens glass cleaning system according to at least one of the preceding claims, **characterized in that** the washer fluid pipe (8) is manufactured as one piece together with electric leads (22) for supplying the heating element (16) of the washer nozzle (6, 7) with electric current.

## Revendications

1. Système de nettoyage de glaces pour une vitre d'un véhicule automobile, comportant un bras de monture d'essuie-glace, monté en pivotement et destiné à supporter une raclette d'essuie-glace glissant, dans la position de montage prévue, sur la vitre, et au moins une conduite de liquide de lavage, montée sur le bras de monture d'essuie-glace et conduisant à un gicleur de lavage orienté vers la vitre, où le liquide de lavage se trouvant dans le gicleur de lavage et / ou dans la conduite de liquide de lavage peut être chauffé, **caractérisé par le fait qu'**une soupape de retenue (12) est disposée, vu dans le sens du flux, directement avant le gicleur de lavage (6, 7), et qu'un élément chauffant électrique (16) est disposé à proximité du gicleur de lavage (16).

2. Système de nettoyage de glaces selon la revendication 1 **caractérisé par le fait que** le gicleur de lavage (6, 7) est conçu en commun avec l'élément chauffant (16) et la soupape de retenue (12) comme unité constructive pré-assemblée.

3. Système de nettoyage de glaces selon la revendication 1 ou 2 **caractérisé par le fait que** la soupape de retenue (12) est soumise en position fermée à la précontrainte d'une force prévue pour retenir la colonne de liquide de lavage.

4. Système de nettoyage de glaces selon au moins l'une des revendications précédentes **caractérisé par le fait que** la soupape de retenue (12) est conçue comme soupape à bec de canard.

5. Système de nettoyage de glaces selon au moins l'une des revendications précédentes **caractérisé par le fait que** le gicleur (6, 7) est placé sur un support (5) et que la soupape de retenue (12) est insérée entre une tubulure de raccordement (13) de la conduite de liquide de lavage (8) et le support (5).

6. Système de nettoyage de glaces selon au moins l'une des revendications précédentes **caractérisé par le fait que** le support (5) a un évidement (18) destiné à recevoir l'élément chauffant (16).

7. Système de nettoyage de glaces selon au moins l'une des revendications précédentes **caractérisé par le fait que** l'évidement (18) peut être fermé par un clapet (17).

8. Système de nettoyage de glaces selon au moins l'une des revendications précédentes **caractérisé par le fait que** le support (5) est lié au clapet (17) par une charnière à membrane (19).

9. Système de nettoyage de glaces selon au moins l'une des revendications précédentes **caractérisé par le fait que** le support (5) est fabriqué en matière plastique par un procédé à moulage par injection.

10. Système de nettoyage de glaces selon au moins l'une des revendications précédentes **caractérisé par le fait que** le gicleur de lavage (6, 7) a une tête de gicleur Fluidic.

11. Système de nettoyage de glaces selon au moins l'une des revendications précédentes **caractérisé par le fait que** le gicleur de lavage (6, 7) a une tête de gicleur à jet plat.

12. Système de nettoyage de glaces selon au moins l'une des revendications précédentes **caractérisé par le fait que** l'élément chauffant (16) est conçu comme réseau à couches épaisses.

13. Système de nettoyage de glaces selon au moins l'une des revendications précédentes **caractérisé par le fait que** l'élément chauffant (16) est conçu comme élément à coefficient positif de température (ou élément PTC pour "Positive Temperature Coefficient", en anglais).

14. Système de nettoyage de glaces selon au moins l'une des revendications précédentes **caractérisé par le fait que** la conduite de liquide de lavage (8) est fabriquée en une seule pièce avec des conducteurs électriques (22) destinés à l'alimentation en courant électrique de l'élément chauffant (16) du gicleur de lavage (6, 7).
